# EUROPÄISCHE PATENTSCHRIFT

(11) **EP 3 419 839 B1**
(45) Veröffentlichungstag und Bekanntmachung des Hinweises auf die Patenterteilung: **12.02.2020**
(21) Anmeldenummer: 16828719.1
(22) Anmeldetag: 20.12.2016
(51) Int. Cl.: B60C 7/10, B60C 11/24

(54) **VOLLGUMMIREIFEN**
SOLID RUBBER TYRE
PNEU PLEIN

(30) Priorität: 26.02.2016 DE 102016203039
(43) Veröffentlichungstag der Anmeldung: 02.01.2019
(73) Patentinhaber: Continental Reifen Deutschland GmbH, 30165 Hannover (DE)
(72) Erfinder: MÜLLER, Matthias-Stephan, 30827 Garbsen (DE); HALLMANN, Steffen, 30171 Hannover (DE); MINX, Carsten, 31535 Neustadt (DE); ZIMMERMANN, Bernd, 31867 Lauenau (DE); MALTER, Monika, 30419 Hannover (DE); HEINRICH, Nikolas, 30823 Garbsen (DE)
(74) Vertreter: Finger, Karsten
(86) Internationale Anmeldenummer: PCT/EP2016/081850
(87) Internationale Veröffentlichungsnummer: WO 2017/144142

(56) Entgegenhaltungen:
- EP-A1- 0 622 251
- EP-A2- 0 787 604
- CN-A- 102 490 553
- DE-U- 1 918 575
- DE-U- 1 993 828
- JP-A- H07 232 508
- JP-A- 2003 146 008
- KR-A- 20140 084 357

## Beschreibung

Die Erfindung betrifft einen Vollgummireifen mit einem mit einer Felge in Kontakt kommenden Reifengrundkörper, welcher einen Bodenteil, eine Deckschicht und eine Zwischenschicht aufweist, sowie mit einem mit einer Fahrbahn in Berührung tretenden Laufflächenteil aus einer als Füllstoff überwiegend oder ausschließlich Kieselsäure enthaltenden Gummimischung und mit zwei Seitenwänden, welche zumindest die Zwischenschicht seitlich bedecken, wobei der maximal zulässige Abrieb des Laufflächenteils durch Markierungen an den Laufflächenteilseiten gekennzeichnet ist.

Es ist bekannt, Vollgummireifen, sogenannte Non-Marking-Reifen, mit einer hellen Lauffläche auf Gabelstaplern und ähnlichen Transportfahrzeugen einzusetzen, insbesondere in jenen Bereichen, wo Verschmutzungen und Fahrspuren unerwünscht sind bzw. vermieden werden sollen. Die Laufflächenteile solcher Vollgummireifen enthalten als Füllstoff keinen Ruß und ausschließlich Kieselsäure. Ein derartiger Vollgummireifen ist beispielsweise aus der DE 10 154 454 C1 bekannt.

Aus der DE 19 93 828 U ist ein Vollgummireifen mit einem Reifengrundkörper, bestehend aus einem Bodenteil und einer Deckschicht, einer Zwischenschicht, einem Laufflächenteil und zwei Seitenwänden, bekannt. Der Laufflächenteil, die beiden Seitenwände und die Deckschicht des Reifengrundkörpers weisen eine größere elektrische Leitfähigkeit auf als die Zwischenschicht. Bei auf einer der Felge montiertem Vollgummireifen steht die Deckschicht des Reifengrundkörpers mit der Felge in Kontakt.

Weitere Vollgummireifen sind aus der JP H07 232 508 A, der JP 2003 146 008 A, der EP 0 622 251 A1, der EP 0 787 604 A2, der DE 19 18 575 U, der KR 2014 008435 7 A und der CN 102 490 553 A bekannt.

Vollgummireifen mit Laufflächenteilen, die aus einer Gummimischung mit einem hohen Anteil an Kieselsäure gefertigt sind, insbesondere einem Kieselsäureanteil von mindestens 40 phr, sind abriebbeständig und unempfindlich gegenüber Schnittverletzungen, besitzen jedoch eine hohe Wärmeentwicklung. Durch die hohe Wärmeentwicklung leiden die Haltbarkeit und die Laufleistung solcher Vollgummireifen. Insbesondere bei Vollgummireifen mit einer hohen Laufflächenteilstärke kann die generierte Wärme über die unmittelbar anschließende Zwischenschicht, welche aus einer Ruß gefüllten Gummimischung hergestellt ist, eine gewisse Wärmeleitfähigkeit aufweist und hinsichtlich der Federungs- und Dämpfungseigenschaften des Reifens optimiert ist, nicht ausreichend abgeleitet werden.

Der Erfindung liegt somit die Aufgabe zugrunde, einen Vollgummireifen der eingangs genannten Art diesbezüglich zu verbessern, insbesondere dafür zu sorgen, dass seine Haltbarkeit und seine Laufleistung jener von Vollgummireifen mit einer Ruß gefüllten Laufstreifenmischung weitgehend gleich kommt.

Gelöst wird die gestellte Aufgabe erfindungsgemäß dadurch, dass zwischen der Zwischenschicht und dem Laufflächenteil eine Unterplatte angeordnet ist, welche Seitenflanken aufweist, die von den Seitenwänden komplett überdeckt sind, und welche aus einem Gummimaterial besteht, dessen Wärmeleitfähigkeit größer ist als die Wärmeleitfähigkeit der Zwischenschicht und mindestens 0,25 W/mK beträgt.

Durch die erfindungsgemäßen Maßnahmen wird der Wärmeaufbau im Reifen deutlich reduziert und es wird ermöglicht, die im Laufflächenteil generierte Wärme gut abzuführen. Das Risiko, dass ein sogenannter Hotspot im Laufflächenteil entsteht, ist stark reduziert, wodurch die strukturelle Haltbarkeit des Laufflächenteils wesentlich verbessert wird. Die Erfindung erlaubt es daher, einen Vollsilika- Laufstreifen mit einer sehr hohen Laufflächenteilstärke auszuführen, welcher eine zu herkömmlichen Reifen vergleichbare Haltbarkeit und eine entsprechende Laufleistung aufweist.

Die gemäß der Erfindung vorgesehene Unterplatte sollte, um eine gute Wärmeableitung zu gewährleisten, eine gewisse Mindestdicke aufweisen. Bevorzugt weist daher die Unterplatte in ihrem Bereich radial innerhalb des Laufflächenteils eine im Wesentlichen konstante Dicke von mindestens 4 mm auf. Insbesondere in Vollgummireifen kleinerer Dimensionen und mit einer relativ geringen Laufflächendicke ist eine geringe Dicke der Unterplatte für eine gute Wärmeableitung durchaus ausreichend.

Bei größer dimensionierten Vollgummireifen und insbesondere bei solchen Vollgummireifen, die eine relativ große Laufflächendicke aufweisen, kann die Unterplatte auch wesentlich dicker ausgeführt sein als 4 mm. Von Vorteil ist es jedoch, wenn die Unterplatte in ihrem Bereich radial innerhalb des Laufflächenteils eine im Wesentlichen konstante Dicke von höchstens 40 mm aufweist. Da die Unterplatte Bauraum der Zwischenschicht beansprucht, ist es für einen Erhalt ihrer dämpfenden Eigenschaften vorteilhaft, die Unterplatte nicht zu dick auszuführen.

Je nach Reifentyp und Reifendimension beträgt bei einer bevorzugten Ausführung der Erfindung das Verhältnis der Dicke des Laufflächenteils zur Dicke der Unterplatte, jeweils entlang der Mittellinie des Reifens ermittelt, 1:1 bis 8:1.

Die Anordnung der Unterplatte soll vorteilhafterweise nach wie vor sicherstellen, dass der Reifen bis zu den einen maximal zulässige Abrieb des Laufflächenteils kennzeichnenden Markierungen, beispielsweise den 60J-Linien, abgefahren werden kann. Es ist daher von Vorteil, wenn sich die Mitte der radial äußeren Grenzfläche der Unterplatte im Querschnitt entweder beim Schnittpunkt zwischen der Mittellinie des Reifens und einer die beiden Markierungen an den Laufflächenteilseiten verbindenden geraden Linie oder in einem Abstand von höchstens 5 mm radial innerhalb dieses Schnittpunktes befindet.

Die Seitenflanken der Unterplatte tragen ebenfalls zur Wärmeableitung bei. Bevorzugter Weise weisen die Seitenflanken, abgesehen von ihren auslaufenden Endbereichen, eine im Wesentlichen konstante Stärke von 1,5 mm bis 15 mm auf.

Die Wärmeleitfähigkeit der Unterplatte ist ferner um mindestens 3 %, insbesondere um mindestens 5 %, größer als jene der Zwischenschicht und kann bis zu 25 % größer sein. Die Wärmeleitfähigkeit der Unterplatte kann vorzugsweise bis zu 0,45 W/mK betragen.

Ein Parameter, der auf die Wärmeleitfähigkeit der Unterplatte Einfluss nimmt, ist der Anteil an Ruß in der Gummimischung, aus welcher die Unterplatte hergestellt ist. Dieser Anteil sollte 40 phr bis 70 phr, insbesondere ≤ 55 phr, betragen.

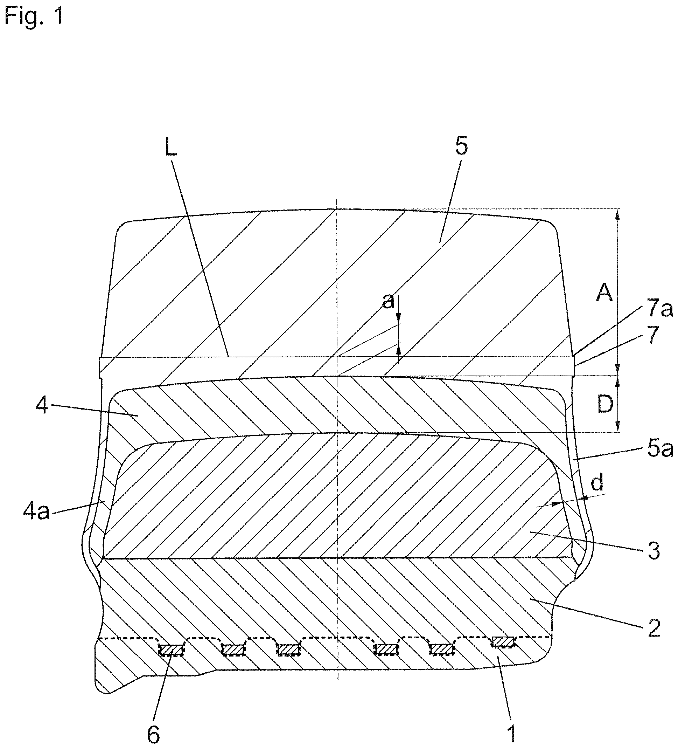

Weitere Merkmale, Vorteile und Einzelheiten der Erfindung werden nun anhand der einzigen Figur, Fig.1, die schematisch einen Querschnitt durch ein Ausführungsbeispiel eines Vollgummireifens gemäß der Erfindung darstellt, näher beschrieben.

Vollgummireifen gemäß der Erfindung sind insbesondere Reifen für mobile Arbeitsmaschinen, wie Flurförderzeuge, beispielsweise Gabelstapler oder Telehandler. Gemäß dem in Fig.1 gezeigten Querschnitt durch einen Vollgummireifen weist dieser einen Grundkörper mit einem radial inneren Bodenteil 1, einer auf diesem befindlichen Deckschicht 2 und einer Zwischenschicht 3 auf. Der Vollgummireifen weist ferner einen Laufflächenteil 5 auf, wobei sich zwischen der Zwischenschicht 3 und dem Laufflächenteil 5 eine Unterplatte 4 befindet. Der Bodenteil 1 und die Deckschicht 2 bestehen aus einem harten Gummimaterial, insbesondere werden der Bodenteil 1 und die Deckschicht 2 aus der gleichen Kautschukmischung gefertigt. Bei der Herstellung des Vollgummireifens werden auf der Mischungsschicht des Bodenteils 1 den Reifen verstärkende metallische Kerne 6 in Umfangsrichtung umlaufend und nebeneinander platziert. Die auf der Deckschicht 2 befindliche Zwischenschicht 3 besteht üblicherweise aus einem elastischen Gummimaterial, welches hinsichtlich der erwünschten Federungs- und Dämpfungseigenschaften des Vollgummireifens ausgelegt und optimiert ist. Der Laufflächenteil 5 besteht aus einem Gummimaterial, welches einen hohen Anteil an Kieselsäure (Silika) als Füllstoff enthält, insbesondere beträgt der Anteil an Kieselsäure in der Kautschukmischung für den Laufstreifenteil 45 phr bis 65 phr. Wenn überhaupt, ist Ruß nur in einem sehr kleinen Anteil enthalten, insbesondere als Farbpigment für einen schwarzen Laufflächenteil 5.

Der Laufflächenteil 5 geht seitlich in Seitenwände 5a über, die insbesondere aus dem gleichen Gummimaterial wie der Laufflächenteil 5 bestehen. Die erlaubte Abriebsgrenze des Laufflächenteils 5 ist durch die sogenannten 60J-Linien 7a an den radial inneren Seitenbereichen des Laufflächenteils 5 gekennzeichnet. Üblicherweise entsprechen die 60J-Linien den radial äußeren Kanten von an den Seitenbereichen des Laufflächenteils 5 ausgebildeten, ringförmig umlaufenden Erhebungen 7. Die Abriebsgrenzen können auch durch anders ausgeführte Markierungen an den Seiten des Laufflächenteils 5 sichtbar gemacht sein.

Die Unterplatte 4 weist einen radial innerhalb des Laufflächenteils 5 und im Wesentlichen über dessen Breite verlaufenden, weitgehend konstant dicken Mittelteil 4a und Seitenflanken 4b aus einem Gummimaterial auf, welches als Füllstoff zumindest einen Ruß, vorzugsweise keine Kieselsäure, wenn überhaupt nur in kleinen Mengen, enthält. Die der Unterplatte 4 zu Grunde liegende Kautschukmischung enthält insbesondere 45 phr bis 55 phr Ruß. Die Seitenwände 5a des Laufflächenteils 5 überdecken die Seitenflanken 4a, welche die Zwischenschicht 3 seitlich komplett bedecken und bis zur Deckschicht 2 reichen. Die Mitte der radial äußeren Grenzfläche des Mittelteils 4a der Unterplatte 4 befindet sich im Querschnitt entweder beim Schnittpunkt zwischen der Mittellinie M-M des Vollgummireifens und einer die beiden 60J-Linien verbindenden geraden Linie L oder radial innerhalb der Linie L in einem Abstand a von höchstens 5 mm von diesem Schnittpunkt. Die Dicke D des Mittelteils 4a beträgt mindestens 4 mm und höchstens 40 mm, je nach Reifendimension und Reifentyp, wobei die Dicke D insbesondere derart gewählt ist, dass das Verhältnis der Dicke A des Laufflächenteils 5, entlang der Mittellinie M-M ermittelt, zur Dicke D des Mittelteils 4a der Unterplatte 4 1:1 bis 8:1 beträgt. Die Dicken D und A sind, abgesehen von produktionsbedingten Schwankungen, bis zu den Seitenwänden 5a bzw. den Seitenflanken 4a im Wesentlichen konstant. Die Seitenflanken 4a weisen, abgesehen von ihren auslaufenden Endbereichen, eine im Wesentlichen konstante Stärke d von 1,5 mm bis 15 mm auf. Die Unterplatte 4 reduziert die Dicke der Zwischenschicht 3 gegenüber einem Vollgummireifen ohne Unterplatte.

Von besonderer Bedeutung ist, dass das Gummimaterial der Unterplatte 4 eine Wärmeleitfähigkeit von mindestens 0,25 W/mK, insbesondere von bis zu 0,45 W/mK, aufweist. Die gute Wärmeleitfähigkeit des Gummimaterials wird vor allem durch den Füllstoff Ruß sichergestellt. Das Gummimaterial der Unterplatte 4 weist ferner eine größere Wärmeleitfähigkeit auf als das Gummimaterial der Zwischenschicht 3. Die Wärmeleitfähigkeit der Unterplatte 4 ist dabei um mindestens 3 %, insbesondere um mindestens 5 %, vorzugsweise um bis zu 25 %, größer als jene der Zwischenschicht 3.

Die dem Gummimaterial der Unterplatte 4 zugrunde liegende Kautschukmischung enthält vorzugsweise folgende Komponenten:

| | |
|---|---|
| NR: | 10 phr - 100 phr, insbesondere ≥ 80 phr |
| BR: | 0 phr - 50 phr, insbesondere ≤ 20 phr |
| SBR: | 0 phr - 50 phr, insbesondere ≤ 20 phr |
| Ruß: | 40 phr - 70 phr, insbesondere ≤ 55 phr |
| Silika: | 0 phr - 10 phr, insbesondere ≤ 6 phr |
| Öl: | 0 phr - 15 phr, insbesondere < 5 phr |

Des Weiteren enthält die Kautschukmischung ein übliches Vulkanisationssystem und ein übliches Alterungsschutzsystem.

### Bezugsziffernliste

- 1: Bodenteil
- 2: Deckschicht
- 3: Zwischenschicht
- 4: Unterplatte
- 4a: Seitenflanke
- 5: Laufflächenteil
- 5a: Seitenwand
- 6: Kern
- 7: 60J-Linie
- A, D, d: Dicke
- L: Linie
- a: Abstand

## Patentansprüche

1. Vollgummireifen mit einem mit einer Felge in Kontakt kommenden Reifengrundkörper, welcher einen Bodenteil (1), eine Deckschicht (2) und eine Zwischenschicht (3) aufweist, sowie mit einem mit einer Fahrbahn in Berührung tretenden Laufflächenteil (5) aus einer als Füllstoff überwiegend oder ausschließlich Kieselsäure enthaltenden Gummimischung und mit zwei Seitenwänden (5a), welche zumindest die Zwischenschicht (3) seitlich bedecken, wobei der maximal zulässige Abrieb des Laufflächenteils (5) durch Markierungen an den Laufflächenteilseiten **gekennzeichnet ist,**
**dadurch gekennzeichnet,**
dass zwischen der Zwischenschicht (3) und dem Laufflächenteil (5) eine Unterplatte (4) angeordnet ist, welche Seitenflanken (4a) aufweist, die von den Seitenwänden (5a) komplett überdeckt sind, und welche aus einem Gummimaterial besteht, dessen Wärmeleitfähigkeit größer ist als die Wärmeleitfähigkeit der Zwischenschicht (3) und mindestens 0,25 W/mK beträgt.

2. Vollgummireifen nach Anspruch 1, **dadurch gekennzeichnet, dass** die Unterplatte (4) im Bereich radial innerhalb des Laufflächenteils (5) eine im Wesentlichen konstante Dicke (D) von mindestens 4 mm aufweist.

3. Vollgummireifen nach Anspruch 1 oder 2, **dadurch gekennzeichnet, dass** die Unterplatte (4) im Bereich radial innerhalb des Laufflächenteils (5) eine im Wesentlichen konstante Dicke (D) von höchstens 40 mm aufweist.

4. Vollgummireifen nach einem der Ansprüche 1 bis 3, **dadurch gekennzeichnet, dass** das Verhältnis der Dicke (A) des Laufflächenteils (5) zur Dicke (D) der Unterplatte (4), jeweils entlang der Mittelline (M-M) des Reifens ermittelt, 1:1 bis 8:1 beträgt.

5. Vollgummireifen nach einem der Ansprüche 1 bis 4, **dadurch gekennzeichnet, dass** sich die Mitte der radial äußeren Grenzfläche der Unterplatte (4) zum Laufflächenteil (5) im Querschnitt entweder beim Schnittpunkt zwischen der Mittellinie (M-M) des Reifens und einer die beiden 60J-Linien (7a) verbindenden geraden Linie (L) oder in einem Abstand (a) von höchstens 5 mm radial innerhalb dieses Schnittpunktes befindet.

6. Vollgummireifen nach einem der Ansprüche 1 bis 5, **dadurch gekennzeichnet, dass** die Seitenflanken (4a) der Unterplatte (4), abgesehen von ihren auslaufenden Endbereichen, eine im Wesentlichen konstante Stärke (d) von 1,5 mm bis 15 mm aufweisen.

7. Vollgummireifen nach einem der Ansprüche 1 bis 6, **dadurch gekennzeichnet, dass** die Wärmeleitfähigkeit der Unterplatte (4) um mindestens 3 %, insbesondere um mindestens 5 %, größer ist als jene der Zwischenschicht (3).

8. Vollgummireifen nach einem der Ansprüche 1 bis 7, **dadurch gekennzeichnet, dass** die Wärmeleitfähigkeit der Unterplatte (4) um höchstens 25 % größer ist als jene der Zwischenschicht (3).

9. Vollgummireifen nach einem der Ansprüche 1 bis 8, **dadurch gekennzeichnet, dass** die Wärmeleitfähigkeit der Unterplatte (4) bis zu 0,45 W/mK beträgt.

10. Vollgummireifen nach einem der Ansprüche 1 bis 9, **dadurch gekennzeichnet, dass** die Unterplatte (4) aus einer Gummimischung hergestellt ist, die 40 phr bis 70 phr, insbesondere ≤ 55phr, Ruß enthält.

## Claims

1. Solid rubber tyre, comprising a main tyre body, which comes into contact with a rim and has a bottom part (1), a cover layer (2) and an intermediate layer (3), and comprising a tread part (5), which comes into contact with a roadway and is composed of a rubber compound predominantly or exclusively containing silicic acid as a filler, and comprising two sidewalls (5a), which laterally cover at least the intermediate layer (3), wherein the maximum permissible abrasive wear of the tread part (5) is indicated by markings on the sides of the tread part,
**characterized**
**in that** arranged between the intermediate layer (3) and the tread part (5) is a cushion rubber (4), which has lateral flanks (4a), which are completely covered by the sidewalls (5a) and consist of a rubber material of a thermal conductivity that is greater than the thermal conductivity of the intermediate layer (3) and is at least 0.25 W/mK.

2. Solid rubber tyre according to Claim 1, **characterized in that** the cushion rubber (4) has in the region radially within the tread part (5) a substantially constant thickness (D) of at least 4 mm.

3. Solid rubber tyre according to Claim 1 or 2, **characterized in that** the cushion rubber (4) has in the region radially within the tread part (5) a substantially constant thickness (D) of at most 40 mm.

4. Solid rubber tyre according to one of Claims 1 to 3, **characterized in that** the ratio of the thickness (A) of the tread part (5) to the thickness (D) of the cushion rubber (4), determined in each case along the centreline (M-M) of the tyre, is 1:1 to 8:1.

5. Solid rubber tyre according to one of Claims 1 to 4, **characterized in that** the middle of the radially outer boundary surface of the cushion rubber (4) in relation to the tread part (5) in cross section is located either at the point of intersection between the centreline (M-M) of the tyre and a straight line (L) joining the two 60J lines (7a) or at a distance (a) of at most 5 mm radially within this point of intersection.

6. Solid rubber tyre according to one of Claims 1 to 5, **characterized in that**, apart from their running-out end regions, the lateral flanks (4a) of the cushion rubber (4) have a substantially constant thickness (d) of 1.5 mm to 15 mm.

7. Solid rubber tyre according to one of Claims 1 to 6, **characterized in that** the thermal conductivity of the cushion rubber (4) is greater than that of the intermediate layer (3) by at least 3%, in particular by at least 5%.

8. Solid rubber tyre according to one of Claims 1 to 7, **characterized in that** the thermal conductivity of the cushion rubber (4) is greater than that of the intermediate layer (3) by at most 25%.

9. Solid rubber tyre according to one of Claims 1 to 8, **characterized in that** the thermal conductivity of the cushion rubber (4) is up to 0.45 W/mK.

10. Solid rubber tyre according to one of Claims 1 to 9, **characterized in that** the cushion rubber (4) is produced from a rubber compound which contains 40 phr to 70 phr, in particular ≤ 55 phr, of carbon black.

## Revendications

1. Pneumatique en caoutchouc plein comprenant un corps de pneumatique en contact avec une jante et pourvu d'une partie inférieure (1), d'une couche de revêtement (2) et d'une couche intermédiaire (3), et une partie formant bande de roulement (5) en contact avec une surface de chaussée et formée d'un mélange de caoutchoucs contenant comme matière de remplissage majoritairement ou exclusivement de la silice, et deux parois latérales (5a) qui recouvrent au moins latéralement la couche intermédiaire (3), l'abrasion maximale admissible de la partie formant bande de roulement (5) étant **caractérisée par** des repères placés sur les côtés de la partie formant bande de roulement,
**caractérisé en ce que**
une plaque inférieure (4) est disposée entre la couche intermédiaire (3) et la partie formant bande de roulement (5), laquelle plaque inférieure comporte des flancs latéraux (4a) qui sont entièrement recouverts par les parois latérales (5a) et qui comprennent un matériau en caoutchouc dont la conductivité thermique est supérieure à la conductivité thermique de la couche intermédiaire (3) et est d'au moins 0,25 W/mK.

2. Pneumatique en caoutchouc plein selon la revendication 1, **caractérisé en ce que** la plaque inférieure (4) a, dans la région située radialement à l'intérieur de la partie formant bande de roulement (5), une épaisseur sensiblement constante (D) d'au moins 4 mm.

3. Pneumatique en caoutchouc plein selon la revendication 1 ou 2, **caractérisé en ce que** la plaque inférieure (4) a, dans la région située radialement à l'intérieur de la partie formant bande de roulement (5), une épaisseur (D) sensiblement constante de 40 mm maximum.

4. Pneumatique en caoutchouc plein selon l'une des revendications 1 à 3, **caractérisé en ce que** le rapport de l'épaisseur (A) de la partie formant bande de roulement (5) à l'épaisseur (D) de la plaque inférieure (4), déterminées à chaque fois suivant l'axe (M-M) du pneumatique, est de 1:1 à 8:1.

5. Pneumatique en caoutchouc plein selon l'une des revendications 1 à 4, **caractérisé en ce que** le centre de la surface limite radialement extérieure de la plaque inférieure (4) par rapport à la partie formant bande de roulement (5) est en coupe transversale soit à l'intersection de l'axe (M-M) du pneumatique et de l'une des deux lignes 60J (7a) reliant la droite (L) soit à une distance (a) de 5 mm maximum radialement à l'intérieur de cette intersection.

6. Pneumatique en caoutchouc plein selon l'une des revendications 1 à 5, **caractérisé en ce que** les flancs latéraux (4a) de la plaque inférieure (4), à l'exception de leurs régions d'extrémité sortantes, ont une épaisseur (d) sensiblement constante de 1,5 mm à 15 mm.

7. Pneumatique en caoutchouc plein selon l'une des revendications 1 à 6, **caractérisé en ce que** la conductivité thermique de la plaque inférieure (4) est supérieure d'au moins 3 %, en particulier d'au moins 5 %, à celle de la couche intermédiaire (3).

8. Pneumatique en caoutchouc plein selon l'une des revendications 1 à 7, **caractérisé en ce que** la conductivité thermique de la plaque inférieure (4) est supérieure de 25 % maximum à celle de la couche intermédiaire (3).

9. Pneumatique en caoutchouc plein selon l'une des revendications 1 à 8, **caractérisé en ce que** la conductivité thermique de la plaque inférieure (4) va jusqu'à 0,45 W/mK.

10. Pneumatique en caoutchouc plein selon l'une des revendications 1 à 9, **caractérisé en ce que** la plaque inférieure (4) est fabriquée à partir d'un mélange de caoutchoucs contenant de 40 phr à 70 phr, en particulier ≤ 55 phr, de noir de carbone.
